# EUROPEAN PATENT APPLICATION

(11) **EP 1 878 815 A2**
(43) Date of publication of application: **16.01.2008**
(21) Application number: 07252796.3
(22) Date of filing: 12.07.2007
(51) Int. Cl.: D01F 1/10, D01F 6/00, D01F 8/04, B01D 39/16, B01J 47/12

(54) **Fibers usable for ion-exchange filters**

(30) Priority: 13.07.2006 JP 2006192694
(71) Applicant: Toyota Boshoku Kabushiki Kaisha, Kariya-shi, Aichi-ken (JP); TOYOTA JIDOSHA KABUSHIKI KAISHA, Toyota-city Aichi-pref., 471-8571 (JP)
(72) Inventor: Nakagaki, Nobuhiko, Toyota Boshoku Kabushiki Kaisha, Aichi-ken (JP); Morita, Ashiki, Toyota Boshoku Kabushiki Kaisha, Aichi-ken (JP); Arai, Yasunari, Toyota Boshoku Kabushiki Kaisha, Aichi-ken (JP); Yamagishi, Norio, Toyota Jidosha Kabushiki Kaisha, Aichi-ken (JP); Sekine, Hiroyuki, Toyota Jidosha Kabushiki Kaisha, Aichi-ken (JP)
(74) Representative: Pratt, David Martin

(57) **Abstract**

Fibers (50; 60) usable for an ion exchange filter includes a base material (54; 64) and ion exchange resin particles (10). The base material (54; 64) is made of a hydrophobic resin. The ion exchange resin particles (10) are embedded within the base material (54; 64). At least some of the ion exchange resin particles (10) are exposed on a surface of the base material (54; 64).

## Description

This application claims priority to Japanese patent application serial number 2006-1192694, the contents of which are incorporated herein by reference.

The present invention relates to fibers for usable for ion-exchange filters, and in particular to fibers that can be formed into non-woven fabrics for use in ion exchange filters in order to capture particular ions contained in a solvent or water and to also capture dusts.

As ion-exchange resins, for example, those having styrene-divinylbenzene copolymer as a skeleton is generally known. The styrene-divinylbenzene copolymer skeleton may be obtained by adding divinylbenzene as a cross-linking agent to polystyrene. Such a skeleton has a three dimensional network configuration and the cross-linking of divinylbenzene with polystyrene can control this configuration. An ion exchange resin may be formed by adding ion-exchange groups to the skeleton for bolding the ion-exchange groups to the surface of the skeleton. Therefore, the ion exchange resin has the ion exchange groups disposed on a surface of a three dimensional network space defined by the skeleton or those disposed within the network space. Because of the three dimensional network configuration of the skeleton, water may be absorbed into inside of the ion exchange resin. Therefore, the ion exchange resin can perform an ion exchange function by the ion exchange groups existing on the surface of the ion exchange resin and also by the ion exchange groups existing within the ion exchange resin, so that it is possible to effectively capture ions that may be contained in the water. By taking this advantage, the ion exchange resin has been broadly used for purification of water or for refining various kinds of solutions in various industrial fields. To this end, in general, the ion exchange resin is configured as granules that are filled into columns, modules or the like to constitute a filter.

However, the ion exchange resin has a water absorbing property and may contain absorbed water therein. Therefore, if the water contained in the ion exchange resin has frozen, there is a possibility that the ion exchange resin is broken due to the stress produced by the expansion of volume of the water.

In order to solve this problem, for example, Japanese Laid-Open Patent Publication No. 2004-230215 discloses a method of mitigating the increase of volume of water contained in an ion exchange resin that is configured as granules filled into columns of a filter. This method is based on the improvement of the configuration of the columns and is aimed to provide gaps between the ion exchange resin granules for allowing increase of the volume of the granules. Therefore, this method does not mitigate the volume expansion of the ion exchange resin.

Other than filling ion exchange resin granules into columns or the like, various methods are known for using an ion exchange resin for filters. For example, Japanese Laid-Open Patent Publication No. 11-300364 discloses a method of adhering microparticles of an ion exchange resin onto the surface of a filtration material in a form of non-woven fabric. However, in this publication, the microparticles of the ion exchange resin are not embedded into the fibers of the no-woven fabric but are simply adhered onto the surfaces of the fibers. Therefore, it not possible to mitigate expansion of volume of the ion exchange resin when the water contained in the ion exchange resin has frozen. As a result, there is a possibility that the ion exchange resin microparticles are broken. In addition, there is a possibility that the ion removing efficiency is degraded and that the ion exchange resin microparticles are easily removed to flow downstream from the filter.

Japanese Laid-Open Patent Publication No. 2003-10614 discloses a filter that utilizes ion exchange resin fibers. The length of the ion exchange resin fibers of this filter is determined within a range of between 0.1 mm and 5.0 mm in order to enable the fibers to be uniformly mixed with other structural materials. However, no disclosure or suggestion is made with regard to the fiber diameter. Thus, a larger fiber diameter leads to increase of the expansion of volume, and therefore, the likelihood of breakage may increase.

It is accordingly an object of the present invention to teach fibers usable for ion exchange filters, which include an ion exchange resin as a structural material and are not damaged or prevented from being damaged even if the ion exchange resin has frozen when the resin contains water.

One aspect according to the present invention includes fibers that are usable for ion exchange filters. The fibers include a base material made of a hydrophobic resin and ion exchange resin particles embedded within the base material. At least some of the ion exchange resin particles are exposed on a surface of the base material.

Because the ion exchange resin particles are embedded within the base material, the base material can inhibit expansion of the ion exchange resin particles even in the even that solution or water contained in the ion exchange resin particles has frozen.

In one embodiment, the ion exchange resin particles comprise first particles completely embedded within the base material and second particles exposed on the surface of the base material. Alternatively, substantially all the ion exchange resin particles may be exposed on the surface of the base material.

In another embodiment, the ion exchange resin particles have a diameter of between 5µm and 10µm. With the determination of the diameter smaller than 10µm, change of volume of the ion exchange resin particles may be small even in the event that solution or water contained within the exchange resin particles has frozen. With the determination of the diameter greater than 5µm, the distance between the ion exchange resin particles embedded within the base material may be maintained such that solution or water may be reliably delivered between the adjacent ion exchange resin particles. Therefore, it is possible to efficiently perform the ion exchange function.

Additionally or alternatively, the fiber may have a diameter of between 20µm and 50µm. With the determination of the diameter greater than 20µm, a filter formed by the fibers may have adequate stiffness and the configuration of the filter may be maintained in stable. With the determination of the diameter smaller than 50µm, the weight per unit area can be increased, so that the ion exchange function can be efficiently performed.

Additionally or alternatively, a ratio in volume of the base material to the ion exchange resin particles may be between 80:20 and 20:80.

In a further embodiment, the hydrophobic resin is chosen from a group consisting of a polyester resin, a polyamide resin and a hydrophobic thermoplastic resin. In particular, the hydrophobic resin may be a polyester resin and in particular may be polypropylene. The use of polypropylene may enable a fiber to have excellent acid resistance and alkali resistance.

In another aspect of the present invention includes fibers usable for ion exchange filters, which fibers include a core made of a hydrophobic resin and a surface layer formed on a surface of the core and made of an ion exchange resin.

Because the surface layer made of the ion exchange resin can be formed into a thin film, the change of volume of the ion exchange resin may be small even in the event that solution or water contained in the ion exchange resin has frozen. Therefore, it is possible to inhibit or prevent the ion exchange resin from being damaged. In addition, due to the configuration of the surface layer, it is possible to effectively perform the ion exchange function.

In one embodiment, the surface layer has a thickness of between 2µm and 5µm. With the determination of the thickness smaller than 5µm, the change of volume may be small even in the event that solution or water contained in the ion exchange resin has frozen. Therefore, it is possible to inhibit or prevent the ion exchange resin from being damaged. With the determination of the thickness greater than 2µm, it is possible to ensure a sufficient ion exchange amount.

In another embodiment, the core has a diameter of between 10µm and 50µm. With the determination of the diameter greater than 10µm, a filter formed by using the fibers may have adequate stiffness and the configuration of the filter may be maintained in stable. With the determination of the diameter smaller than 50µm, the weight per unit area of the fiber can be increased, so that it is possible to efficiently perform the ion exchange function.

In a further embodiment, the hydrophobic resin is chosen from a group consisting of a polyester resin, a polyamide resin and a hydrophobic thermoplastic resin. In particular, the hydrophobic resin may be a polyester resin and in particular may be polypropylene. The use of polypropylene may enable a fiber to have excellent acid resistance and alkali resistance.

A further aspect according to the present invention includes fibers made of an ion exchange resin and having a diameter of between 5µm and 20µm. With the determination of the diameter less than 20µm, the change of volume may be small even in the event that solution or water contained in the ion exchange resin has frozen. Therefore, it is possible to inhibit or prevent the ion exchange resin from being damaged. With the determination of the diameter greater than 5µm, it is possible to ensure a sufficient strength of the fiber for forming into a filter.

A still further aspect according to the present invention includes non-woven fabrics formed by the fibers. The non-woven fabrics have a weight per unit area of between 50g/m² and 500g/m². With this determination, it is possible to optimize the ion exchange efficiency, the dust retaining amount and the pressure loss of a filter that is formed by using the non-woven fabric.

Additional objects, features, and advantages, of the present invention will be readily understood after reading the following detailed description together with the claims and the accompanying drawings, in which:
FIG. 1 is a schematic view of an ion exchange resin particle;
FIG. 2(A) is a perspective view of a fiber usable for an ion exchange filter according to a first embodiment of the present invention;
FIG. 2(B) is an enlarged view of a part of a cross section along a diametrical direction of the fiber shown in FIG. 2(A);
FIG. 3(A) is a perspective view of a fiber usable for an ion exchange filter according to a second embodiment of the present invention;
FIG. 3(B) is an enlarged view of a part of a cross section along a diametrical direction of the fiber shown in FIG. 3(A);
FIG. 4(A) is a perspective view of a fiber usable for an ion exchange filter according to a third embodiment of the present invention, with a part of a surface layer of the fiber broken away;
FIG. 4(B) is an enlarged view of a part of a cross section along a diametrical direction of the fiber shown in FIG. 4(A);
FIG. 5(A) is a perspective view of a fiber usable for an ion exchange filter according to a fourth embodiment of the present invention; and
FIG. 5(B) is an enlarged view of a part of a cross section along a diametrical direction of the fiber shown in FIG. 5(B).

Each of the additional features and teachings disclosed above and below may be utilized separately or in conjunction with other features and teachings to provide improved fibers usable for ion exchange filters and methods of manufacturing such fibers. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

Fibers usable for ion exchange filters according to the present invention include an ion exchange resin as a structural material that can perform an ion exchange function. In particular, the fibers may be formed into non-woven fabrics that can be suitably used for ion exchange filters for capturing and removing particular ions contained in water or a solution and also for capturing dusts.

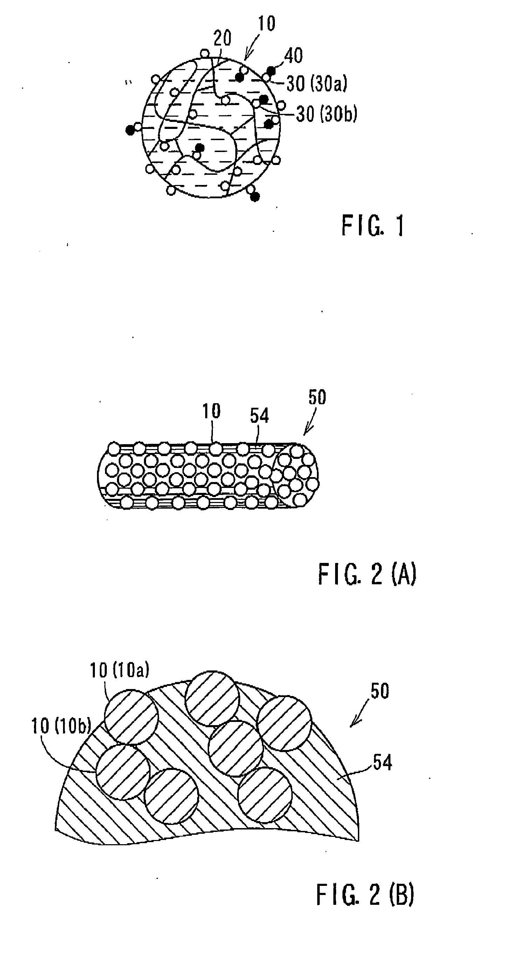

FIG. 1 schematically shows an ion exchange resin particle 10 that includes a hydrophobic resin 20. The hydrophobic resin 20 has a three dimensional network configuration and serves as a skeleton. Ion exchange groups 30 are retained on or bonded to the surface of the hydrophobic resin 20. Therefore, some of the ion exchange groups 30 (hereinafter called "ion exchange groups 30b) are located within a space defined by an outer contour of the network configuration of the hydrophobic resin 20 and the other of the ion exchange groups 30 (hereinafter called "ion exchange groups 30a) are located substantially on an outer surface defining a boundary of the space. In this specification, the hydrophobic resin 20 that serves as a skeleton will be also referred to as a base substance 20. Because the base substance 20 has a three dimensional network configuration, a liquid that may include water or a solution can enter or permeate into the ion exchange resin particle 10. Therefore, as a solution or the like (hereinafter simply called "solution") containing ions 40 to be captured is absorbed into the ion exchange resin particle 10, the ions 40 can be exchanged by the ion exchange groups 30a located on the surface of the ion exchange resin particle 10 and also by the ion exchange groups 30b located within the ion exchange resin particle 10. In other words, the ion exchange resin particle 10 can capture the ions 40 at its outer surface of the space as well as at the inner side of the space.

As the material of the base substance 20 of the ion exchange resin particle 10, styrene-divinylbenzene copolymer, acrylic acid-divinylbenzene copolymer, methacrylic acid-divinylbenzene copolymer, phenol-formaldehyde copolymer, etc., can be used. These copolymers can be obtained by various methods that are well known in the art. The base substance 20 also may be referred to as a mother substance.

As the material of the ion exchange groups 30, acidic groups including sulfonic acid groups, carboxyl groups and phenyl hydroxyl groups; and basic groups including quaternary ammonium base groups and substituted amino groups may be used and they may be selected depending on the nature of the ions 40.

Several embodiments of the present invention will now be described.

### <FIRST EMBODIMENT>

As shown in FIGS. 2(A) and 2(B), a fiber 50 usable for an ion exchange filter according to a first embodiment includes ion exchange resin particles 10 that are partly or completely embedded into a hydrophobic resin or a base material 54. More specifically at least some of the ion exchange resin particles 10 are exposed on the surface of the base material 54. In other words, the fiber 50 has a construction as if the ion resin particles 10 have been kneaded into the base material 54.

As described above, some of the ion exchange resin particles 10 are completely embedded into the base material 54 but the remaining ion exchange rein particles 10 are exposed on the surface of the base material 54. Therefore, a solution or water can first enter or permeate into the ion exchange resin particles 10 that are exposed on the surface of the base material 54. The ion exchange resin particles 10 exposed on the surface of the base material 54 will be hereinafter called exposed particles 10(a). The ion exchange resin particles 10 completely embedded into the base material 54 will be hereinafter called completely embedded particles 10(a). Thus, the solution may first enter or permeate into the exposed particles 10(a) and may then be delivered to the embedded particles 10(b) positioned proximally to the completely exposed particles 10(a) to enter and permeate into the completely embedded particles 10(b). The solution may be further delivered to enter and permeate into the other completely embedded particles 10(b) that are positioned proximally to the completely embedded particles 10(b) into which the solution has entered or permeated. Therefore, not only the exposed particles 10(a) but also the completely embedded particles 10(b) can perform the ion exchange function.

As noted above, according to the fiber 50 of this embodiment, the ion exchange resin particles 10 are partially or completely embedded within the base material 54. In other words, the ion exchange particles 10 are contained in the base material 54. Therefore, even if the solution has frozen within the ion exchange resin particles 10, the base material 54 may restrict the expansion of the ion exchange resin particles 10, so that it is possible to prevent or inhibit breakage of the ion exchange resin particles 10. In addition, because the ion exchange resin particles 10 are fixed in position by being embedded within the base material 54, it is possible to prevent the ion exchange resin particles 10 from being removed from the fiber 50 when a plurality of the fibers 50 are used to form a filter. Therefore, it is possible to prevent the ion exchange resin particles 10 from flowing downstream when the solution has been passed through the filter.

Preferably, the diameter (average diameter) of the ion exchange resin particles 10 may be between 5µm and 10µm. With this determination of the diameter, the ion exchange resin particles 10 may be fine, and therefore, change in volume may be small even in the event that the solution contained within the ion exchange resin particles 10 has frozen. For this reason, it is possible to further reduce the likelihood of damage of the ion exchange resin particles 10.

As the diameter of the ion exchange resin particles 10 increases, the ratio of the area of the ion exchange resin particles 10 to the cross sectional area of the fiber 50 increases. In general, the strength of the ion exchange resin particles 10 is lower than the strength of the base material 54. Therefore, if the ion exchange resin particles 10 have been damaged, it is likely that the fiber 50 is torn starting from the place where the damaged particles 10 exist. If a filter is formed using the fibers 50 containing the damaged ion exchange resin particles 10 and the solution is passed through the filter, there is a possibility that the ion exchange resin particles 10 may be removed to flow downstream if the fibers 50 have been torn. By configuring the ion exchange resin particles 10 as fine particles having a diameter equal to or less than 10µm, the fiber 50 may be prevented from being torn due to the strength of the base material 54. Thus, it is possible to maintain the strength of the fiber 50 to be higher by the strength of the base material 54. Therefore, it is possible to prevent the ion exchange resin particles 10 from being removed.

On the contrary, if the diameter of the ion exchange resin particles 10 is smaller than 5µm, the distance between the ion exchange resin particles 10 embedded within the base material 54 may increase. As described above, the solution may be first absorbed by the exposed ion exchange resin particles 10a exposed on the surface of the fiber 50 and may then be delivered to the completely embedded ion exchange resin particles 10b. However, if the distance between the embedded ion exchange resin particles 10b is large, it is difficult to deliver the solution between these particles 10b and it is also difficult to deliver the solution from the exposed ion exchange resin particles 10a to the completely embedded ion exchange resin particles 10b. This may result that the solution can be absorbed only by the exposed ion exchange resin particles 10a and may not be delivered to the completely embedded ion exchange resin particles 10b. In such a case, the available ion exchange amount per unit volume or unit weight of the fiber 50 may be considerably decreased.

For the above reasons, determination of the diameter of the ion exchange resin particles 10 between 5µm and 10µm is advantageous in minimizing the likelihood of breakage of the ion exchange resin particles 10 when the solution within the ion exchange resin particles 10 has frozen. In addition, the ion exchange function can be effectively performed, and the strength of the fiber 50 may be improved.

Preferably, the diameter of the fiber 50 may be between 20µm and 50µm. If the fiber diameter is smaller than 20µm, the stiffness of a filter formed by the fibers 50 may be low and it is difficult to maintain the configuration of the filter. On the contrary, if the fiber diameter is greater than 50µm, the surface per unit area of the fiber may be reduced, and therefore, the ion removing efficiency may be lowered. As a result, by determining the fiber diameter between 20µm and 50µm, it is possible to form a filter that can effectively remove ions and that is stable in shape.

More preferably, the fiber 50 may have a diameter of between 20µm and 50µm and may be formed using the ion exchange resin particles 10 having a diameter of between 5µm and 10µm. If the fiber diameter is between 20µm and 50µm but the diameter of the ion exchange resin particles 10 is greater than 10µm, it may be possible that the diameter of the ion exchange resin particles 10 exceeds half the fiber diameter. In such a case, there will be a possibility that the fiber 50 is broken at the regions of the ion exchange resin particles 10 to the result that the ion exchange resin particles 10 are removed. On the contrary, if the fiber diameter is between 20µm and 50µm but the diameter of the ion exchange resin particles 10 is less than 5µm, the number of the exposed ion exchange resin particles 10a on the surface of the fiber 50 may be reduced and the distance between the completely embedded ion exchange resin particles 10b within the base material 54 may be increased. This condition is not preferable, because there is a possibility that the ion exchange function cannot be effectively performed.

The strength of the fiber 50 and the amount of exchange of ions available by the fiber 50 can be controlled by changing the ratio of the volume of the base material 54 to the volume of the ion exchange resin particles 10. Preferably, the ratio in volume of the base material 54 to the ion exchange resin particles 10 may be between 80:20 and 20:80. As the percentage of the base material 54 increases, the strength of the fiber 50 may become higher. However, if the percentage of the base material 54 increases to be out of the above range, there is a possibility that the ion exchange amount available by the fiber 50 cannot be ensured enough. On the contrary, as the percentage of the ion exchange resin particles 10 increases, the ion exchange amount available by the fiber 50 may increase. However, if the percentage of the ion exchange resin particles 10 increases to be out of the above range, the strength of the fiber 50 may be lowered to increase the likelihood of breakage of the fiber 50.

As the base material 54, a polyester resin, such as polypropylene, polyethylene, polyacrylonitrille, polyethylene terephthalate and polybutylene terephthalate; polyamide resin, such as nylon 6 and nylon 66; and various types of hydrophobic thermoplastic resin, such as polyvinyl chloride, polyvinylidene chloride and polyurethane can be used. Among these materials, polypropylene is particularly preferable, because the fiber 50 obtained by using polypropylene as the base material 54 may be excellent in acid resistance, alkali resistance, heat resistance and hydrolysis resistance and may have high tensile strength to provide excellent durability. Depending on the ion exchange group 30 to be used, the ion exchange resin particles 10 may have strong acidity with pH less than 2 or may be strongly basic with pH greater than 11, However, by using propylene, which is excellent in acid resistance and alkali resistance, as the base material 54, the fiber 50 may be obtained that has high durability with high tensile strength independently of the selection of the material of the ion exchange resin particles 52. Additives, such as plasticizer, thermal stabilizer and antioxidant generally used in a resin molding process, may be added to the base material 54.

The fiber 50 according to the first embodiment can be obtained by kneading the ion exchange resin particles 10 into the,hydrophobic resin that forms the base material 54. More specifically, the hydrophobic resin for forming the base material 54 is heated and melted. During this process, the ion exchange resin particles 10 are added to the molten hydrophobic resin and are mixed therewith, and the mixture is then spun into fibers. The ion exchange resin particles 10 may be formed by using any of the conventional processes known in the art as long as the ion exchange groups 30 are bonded to the base substance 20 that has a three dimensional network configuration. In addition, the method of spinning the fibers 50 may not be limited to any particular method. For example, a centrifugal spinning process, an extrusion spinning process or any other suitable processes may form fibers. Further, the formed fibers may be drawn or stretched. The fibers 50 may be formed into a non-woven fabric by a process in succession to the spinning process. Such a process for forming a non-woven fabric may include a process known as a spun-bonding process, in which the spun fibers 50 are stacked in a layer and are then pressed by a heating roller in order to bond the fibers together by heat.

The fiber 50 of this embodiment can be obtained by any other methods than the method described above. For example, the following method can form the fiber 50. First, the hydrophobic resin for forming the base material 54 is heated and melted. During this process, the base substance 20 (having a three dimensional network configuration) in particle forms are added to the molten hydrophobic resin and are mixed therewith, and the mixture is then spun into fibers that contain the base substance 20. Next, the ion exchange groups 30 are added to the base substance 20 to form the ion exchange resin particles 10 having the ion exchange groups 30 bonded to the base substance 20, so that the fibers 50 having the ion exchange resin particles 10 kneaded therein can be obtained. Addition of the ion exchange groups 30 to the base substance 20 can be made by using a known process for adding ion exchange groups to a base substance as is incorporated into the conventional method for manufacturing ion exchange resin.

For example, if the base substance 20 is styrene-divinylbenzene copolymer, the ion exchange resin particles 10 retain sulfonic acid groups as the ion exchange groups 30, and the fibers 50 contain the ion exchange resin particles 10 that are kneaded into polypropylene as the base material 40, the following method can be used. First, polypropylene is heated and melted. During this process, styrene-divinylbenzene copolymer particles are added to and mixed with the molten polypropylene, and thereafter, the mixture is spun to form fibers. Concentrated sulfuric acid is subsequently applied to contact with the fibers, so that sulfonic acid groups are added to the styrene-divinylbenzene copolymer. During this process, concentrated sulfuric acid may first enter or permeate into styrene-divinylbenzene copolymer exposed on surfaces of the fibers and may then enter or permeate into styrene-divinylbenzene copolymer embedded into polypropylene proximally to the exposed styrene-divinylbenzene copolymer and may further enter or permeate into the other embedded styrene-divinylbenzene copolymer proximal thereto. In this way, it is possible to add or bond sulfonic acid groups to the embedded styrene-divinylbenzene copolymer.

Some of known ion exchange resin materials have inadequate heat resistance and are instable at a melting temperature of the hydrophobic resin (i.e., the base material 54). However, according to the above method, the base substance 20 having heat resistance is kneaded into or mixed with the hydrophobic resin (i.e., the base material 54) before the ion exchange groups 30 are added. Therefore, the kneading process or the mixing process can be performed without taking into account of the influence of heat. It is also possible to form the fibers into a non-woven fabric by using a suitable process, such as a spun-bonding process, in succession to the spinning process of the fibers that contain the base substance 20. The ion exchange groups 30 may be added to the base substance 20 contained in the fibers of the non-woven fabric.

### <SECOND EMBODIMENT>

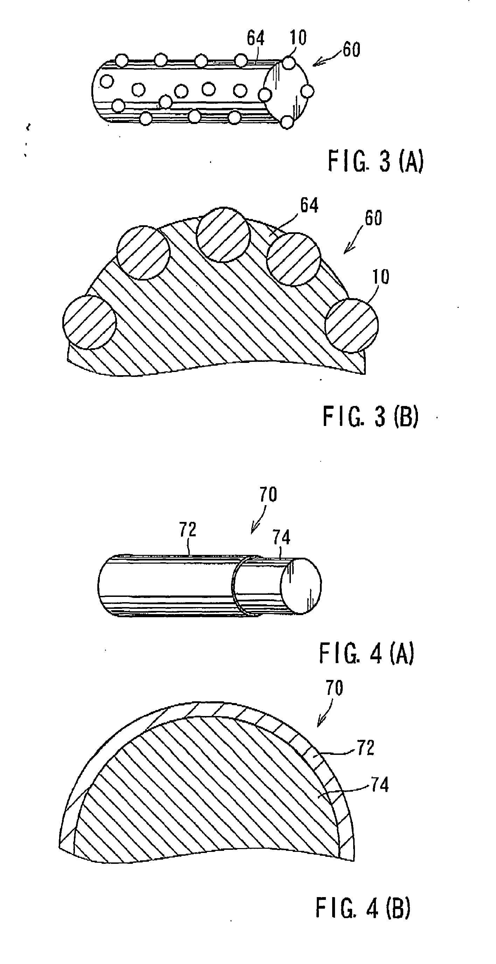

A second embodiments will now be described with reference to FIGS. 3(A) and 3(B). The second embodiment is a modification of the first embodiment. Therefore, in FIGS. 3(A) and 3(B), like members are given the same reference numerals as the first embodiment, and the description of these elements will not be repeated.

As shown in FIGS. 3(A) and 3(B), a fiber 60 usable for an ion exchange filter according to the second embodiment includes ion exchange resin particles 10 that are partly embedded into a hydrophobic resin or a base material 64. More specifically, all the ion exchange resin particles 10 are exposed on the surface of the base material 64 of the fiber 60. In other words, the fiber 60 has a configuration in which the ion resin particles 10 are embedded partly into the surface of the base material 64. Thus, although the fiber 60 according to the second embodiment is similar to the fiber 50 according to the first embodiment in that the ion exchange resin particles 10 are embedded into the base material 54, the fiber 60 is different from the fiber 50 in that all the ion exchange resin particles 10 are exposed on the surface of the fiber 60.

As described above, the ion exchange resin particles 10 are embedded into the base material 64. Therefore, even if the solution has frozen within the ion exchange resin particles 10, the base material 64 may restrict the expansion of the ion exchange resin particles 10, so that it is possible to prevent or inhibit breakage of the ion exchange resin particles 10. In addition, because the ion exchange resin particles 10 are fixed in position by being embedded within the base material 64, it is possible to prevent the ion exchange resin particles 10 from being removed from the fiber 60 when a plurality of the fibers 60 are used to form a filter. Therefore, it is possible to prevent the ion exchange resin particles 10 from flowing downstream when the solution has been passed through the filter. Further, because all the ion exchange resin particles 10 are exposed on the surface of the fiber 60 according to this second embodiment, it is possible to directly absorb the solution by the ion exchange resin particles 10. Therefore, the ion removing function can be efficiently performed.

The materials of the ion exchange resin and the base material used in the first embodiment can also be used for the second embodiment.

The fiber 60 according to the second embodiment can be obtained by the process of heating and melting a hydrophobic resin as the base material 64, forming or spinning the molten resin into fibers, and embedding the ion exchange resin particles 10 into the surface of the obtained fibers. The ion exchange resin particles 10 may be formed by using any of the conventional processes known in the art as long as the ion exchange groups 30 are bonded to the base substance 20 that has a three dimensional network configuration. In addition, the method of spinning the fibers may not be limited to any particular method. For example, a centrifugal spinning process, an extrusion spinning process or any other suitable processes may form fibers. Further, the obtained fibers may be drawn or stretched.

The fiber 60 of this embodiment can be obtained by any other methods than the method described above. For example, the following method can form the fiber 60. First, a hydrophobic resin for forming the base material 64 is heated and melted. Then, the molten resin is extruded through holes formed in an extrusion plate and having a diameter suitable to form fibers. Before the fibers are cooled and solidified, the base substance 20 (having a three dimensional network configuration) in a form of particles is applied to the fibers so as to be embedded into the surfaces of the fibers. Thereafter, the ion exchange groups 30 are added to the base substance 20 that are embedded into the base material 64, so that the ion exchange groups 30 are bonded to the base substance 20 to form the ion exchange resin particles 10. As a result, the fiber 60 having the ion exchange resin particles 10 embedded therein can be obtained. As described in connection with the first embodiment, addition of the ion exchange groups 30 to the base substance 20 can be made by using a known process for adding ion exchange groups to a base substance as is incorporated into the conventional method for manufacturing ion exchange resins. Also, as described in connection with the first embodiment, it is possible to form a non-woven fabric from fibers having the base substance 20 embedded therein and the ion exchange groups 30 can be added to the base substance 20 contained in the non-woven fabric.

### <THIRD EMBODIMENT>

As shown in FIGS. 4(A) and 4(B), a fiber 70 usable for an ion exchange filter according to the third embodiment includes a core 74 made of a hydrophobic resin and a surface layer 72 made of an ion exchange resin. The ion exchange resin forming the surface layer 72 has a skeleton (base substance) having a three dimensional network configuration and also has ion exchange groups both on the surface of the base substance and within the base substance. Therefore, a solution or water can be absorbed into inside of the surface layer 72 and the surface layer 72 can perform the ion exchange function by the ion exchange groups fixed to or bonded to the surface of the base substance and also by the ion exchange groups fixed or bonded within the base substance.

In this third embodiment, the surface layer 72 made of the ion exchange resin has a thin film-like configuration. Therefore, even if the solution has frozen within the surface layer 72, the change of volume of the surface layer 72 or the ion exchange resin is small. As a result, it is possible to prevent or inhibit breakage of the surface layer 72. In addition, even if a pat of the surface layer 72 has been detached from the core 74 or has been broken due to generation of cracks, the surface layer 72 is hardly removed from the fiber 70, because the ion exchange resin of the surface layer 72 covers the surface of the core 74 in a continuous manner along the circumference and along the length of the core 74. Further, the ion exchange resin of the fiber 70 according to this embodiment is disposed on the surface of the fiber 70 as the surface layer 72. Therefore, the ion exchange reaction may rapidly take place, so that the ion exchange function can be efficiently performed.

Preferably, the thickness of the surface layer 72 may be between 2µm and 5µm. If the thickness of the surface layer 72 is larger than 5µm, change in volume may increase in the event that the solution or water within the surface layer 72 has frozen. Therefore, the likelihood of damage of surface layer 72 may increase. On the contrary, if the thickness of the surface layer 72 is smaller than 2µm, there is a possibility that the ion exchange amount available by the fiber 70 cannot be ensured enough in some cases. Thus, the thickness of between 2µm and 5µm can reliably prevent or minimize breakage of the surface layer 72 that may be caused by the frozen solution or water. In addition, it is possible to ensure that the sufficient ion exchange amount is available by the fiber 70.

Preferably, the diameter of the core 74 may be between 10µm and 50µm. By determining the diameter to be greater than 10µm, adequate stiffness can be given to a filter that may be formed by a plurality of the fibers 70. In addition, the shape of the filter can be maintained in stable. On the other hand, by determining the diameter to be less than 50µm, the surface area per unit wait of the fiber 70 can be increased, so that it is possible to efficiently perform the ion exchange function. As a result, it is possible to form a filter that has excellent ion removing efficiency and stability in shape.

As the material of the core 74, a polyester resin, such as polypropylene, polyethylene, polyacrylonitrille, polyethylene terephthalate and polybutylene terephthalate; a polyamide resin, such as nylon 6 and nylon 66; and various types of hydrophobic thermoplastic resins, such as polyvinyl chloride, polyvinylidene chloride and polyurethane can be used. Among these materials, polypropylene is particularly preferable, because the fiber 70 obtained by using polypropylene as the core 74 may be excellent in acid resistance, alkali resistance, heat resistance and hydrolysis resistance and may have high tensile strength to provide excellent durability.

The following process can obtain the fiber 70 according to the third embodiment. First, a surface layer or a coating of a base substance (having a three dimensional network configuration) forming a skeleton of an ion exchange resin is formed on the surface of a hydrophobic resin that forms the core 74. Then, ion exchange groups are applied to the base substance, so that the ion exchange groups are bonded to the base substance to form the surface layer 72 that is made of the ion exchange resin. The fiber 70 can thus be obtained. Addition of the ion exchange groups to the base substance can be made by using a known process for adding ion exchange groups to a base substance as is incorporated into the conventional method for manufacturing ion exchange resins.

### <FOURTH EMBODIMENT>

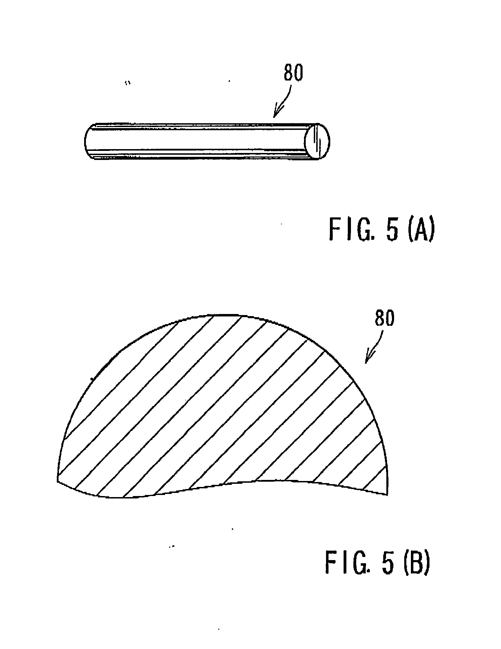

Referring to FIGS. 5(A) and 5(B), a fiber 80 usable for an ion exchange filter according to a fourth embodiment is made of an ion exchange resin and has a diameter of between 5µm and 20µm. Because the fiber 80 is made of the ion exchange resin, the fiber 80 naturally has a skeleton (base substance) having a three dimensional network configuration. In addition, the fiber 80 has ion exchange groups on the surface of the base substance and also within the base substance. Therefore, a solution or water can be absorbed into inside of the filter 80. As a result, the filter 80 can perform the ion exchange function by the ion exchange groups fixed to the surface of the base substance and also by the ion exchange groups fixed within the base substance.

As shown in FIGS. 5(A) and 5(B), the entire fiber 80 of this embodiment is made of an ion exchange resin. Therefore, the fiber 80 can naturally efficiently perform the ion exchange function. In other words, the ion exchange resin constitutes the fiber 80 by itself. Because the diameter is determined to be less than 20µm and is very small, the change of volume of the fiber 80 is small even in the even that the solution has frozen within the fiber 80. Therefore, the likelihood of breakage of the fiber 80 is low. In addition, because the diameter is determined to be greater than 5µm, it is possible to provide sufficient strength necessary for forming the filter.

The fiber 80 according to the fourth embodiment can be obtained by forming a hydrophobic resin into a configuration of a fiber. The hydrophobic resin constitutes a base substance or a skeleton and has a three dimensional network configuration. Thereafter, ion exchange groups are applied to the hydrophobic resin fiber, so that the fiber 80 can be obtained. Addition of the ion exchange groups to the hydrophobic resin fiber can be made by using a known process for adding ion exchange groups to a base substance as is incorporated into the conventional method for manufacturing ion exchange resins.

As described above, the fibers usable for ion exchange filters according to the present invention can efficiently perform the ion exchange function and can be suitably used for the ion exchange filters by forming the fibers into a non-woven fabric. The ion exchange filters incorporating the fibers according to the present invention can capture and remove particular ions contained in a solution or water by an ion exchange reaction and also can capture and remove dusts. In addition, even in the event that the solution has frozen within the ion exchange resin, the change in volume of the ion exchange resin is small, and therefore, the likelihood of breakage of the ion exchange resin is low. As a result, it is possible to install and use the filters in a place where the temperature may be dropped below the freezing point when the filters are not used.

The method of forming the fibers into a non-woven fabric may not be limited to a particular method. For example, various methods including a needle-punching method, a chemical bonding method and a channel interlacing method can be used. In the case of the fibers of the first to third embodiments that contain thermoplastic hydrophobic resins as the base material 54, the base material 64 and the core 74, respectively, it is possible to form the fibers into a non-woven fabric by using a spunbonding method or a thermal bonding method, in which the fibers are boded together by heat.

The weight per unit area of the non-woven fabric may be determined to be between 50g/m² and 500g/m². If the weight per unit area is less than 50g/m², in some cases, the amount of exchange of ion may not be ensured enough, and therefore, the ion exchange efficiency may be low and the dust capturing amount cannot be ensured enough. On the contrary, if the weight per unit area is greater than 500g/m², in some cases, the structure of the non-woven fabric becomes too close, which may lead to a low ion exchange efficiency and a small dust retaining amount. In addition, it is difficult to maintain adequate balance between these parameters and the pressure loss. Forming the non-woven fabric with the weight per unit area within a range of between 50g/m² and 500g/m² can optimize the ion exchange efficiency, the dust retaining amount and the pressure loss of the filter.

In the first to third embodiments, the use of polypropylene as the base material 54, the base material 64 and the core 74 for forming the fibers 50, 60 and 70 is particularly advantageous for eventually forming filters, because the filters thus formed may be excellent in durability. In addition, such filters can efficiently perform the ion exchange function and are excellent in the ion removing efficiency and the dust retaining amount. Furthermore, such filters may have high strength. For example, they can be used under the circumstance where the negative pressure of 50Kpa.abs and the positive pressure of 250Kpa.abs are repeatedly alternately applied. In addition, no significant lowering of the strength may result even if the filters are used in the strong acid or strong alkali environment at a high temperature. The durability is excellent in this respect.

Filters that can be formed by using the fibers according to the present invention may take configurations of columns or modules but may not be limited to any particular configurations.

## Claims

1. A fiber (50; 60) usable for an ion exchange filter, comprising:
a base material (54; 64) made of a hydrophobic resin; and
ion exchange resin particles (10) embedded within the base material (54; 64),
wherein at least some of the ion exchange resin particles (10) are exposed on a surface of the base material (54; 64).

2. The fiber (50) as in claim 1 wherein the ion exchange resin particles (10) comprise first particles (10b) completely embedded within the base material (54) and second particles (10a) exposed on the surface of the base material (54).

3. The fiber (60) as in claim 1 or 2, wherein substantially all the ion exchange resin particles (10) are exposed on the surface of the base material (64).

4. The fiber (50; 60) as in any one of the preceding claims, wherein the ion exchange resin particles (10) have a diameter of between 5µm and 10µm.

5. The fiber (50; 60) as in any one of the preceding claims, wherein the fiber (50; 60) has a diameter of between 20µm and 50µm.

6. The fiber (50; 60) as in any one the preceding claims, wherein a ratio in volume of the base material (54; 64) to the ion exchange resins particles is between 80:20 and 20:80.

7. The fiber (50; 60) as in any one of the preceding claims, wherein the hydrophobic resin is chosen from a group consisting of a polyester resin, a polyamide resin and a hydrophobic thermoplastic resin.

8. The fiber (50; 60) as in any one of the preceding claims, wherein the hydrophobic resin comprises polypropylene.

9. A fiber (70) usable for an ion exchange filter, comprising:
a core (74) made of a hydrophobic resin; and
a surface layer (72) formed on a surface of the core and made of an ion exchange resin.

10. The fiber (70) as in claim 9, wherein the surface layer (72) has a thickness of between 2µm and 5µm.

11. The fiber (70) as in claim 9 or 10, wherein the core (74) has a diameter of between 10µm and 50µm.

12. The fiber (70) as in any one of claims 9 to 11, wherein the hydrophobic resin is chosen from a group consisting of a polyester resin, a polyamide resin and a hydrophobic thermoplastic resin.

13. The fiber (70) as in any one of claims 9 to 12, wherein the hydrophobic resin of the core comprises polypropylene.

14. A fiber (80) usable for an ion exchange filter, the fiber (80) being made of an ion exchange resin and having a diameter of between 5µm and 20µm.

15. A non-woven fabric comprising a plurality of fibers (50; 60; 70; 80) defined in any one of the preceding claims and having a weight per unit area of between 50g/m² and 500g/m².
